# EUROPEAN PATENT SPECIFICATION

(11) **EP 4 325 346 B1**
(45) Date of publication and mention of the grant of the patent: **22.04.2026**
(21) Application number: 23175721.2
(22) Date of filing: 26.05.2023
(51) Int. Cl.: G06F 3/06

(54) **BALANCING THROUGHPUT AND FAIRNESS OF STORAGE DEVICES IN A MULTI-CLIENT ENVIRONMENT**
AUSGLEICH VON DURCHSATZ UND FAIRNESS VON SPEICHERVORRICHTUNGEN IN EINER MULTICLIENT-UMGEBUNG
ÉQUILIBRAGE DE DÉBIT ET D'ÉQUITÉ DE DISPOSITIFS DE STOCKAGE DANS UN ENVIRONNEMENT MULTI-CLIENT

(30) Priority: 19.08.2022 US 202263399333 P; 09.12.2022 US 202218078605
(43) Date of publication of application: 21.02.2024
(73) Proprietor: Google LLC, Mountain View, CA 94043 (US)
(72) Inventor: TRIKA, Sanjeev Narain, Mountain View, 94043 (US); SABOL, Christopher, Mountain View, 94043 (US)
(74) Representative: Betten & Resch

(56) References cited:
- US-A1- 2005 066 138
- US-A1- 2008 104 283
- US-B1- 7 281 086

## Description

### BACKGROUND

The present disclosure relates to operation of storage devices such as solid state disk drives ("SSDs") and conventional disk drives which serve multiple client computers. For example, in a cloud computing environment, a single storage device may store data for a plurality of virtual machines operating in a data center. The storage capacity of the device typically is shared among the clients by allocating a part of the storage to each client. For example, if an SSD has 4 TB of storage capacity, and is shared by four clients, each client may be allocated a share so that the total of the shares amounts to 4TB.

A storage device also has a finite processing load capacity, i.e., a finite capability to handle input and output requests ("IOs"), such as requests to read data from the device and write data to the device. Two arrangements have been used to allocate the processing performance of a storage device heretofore.

In a "performance throttling" arrangement, each client is allocated a portion of the processing load capacity of the device, and the flow of IOs from each client to the device is limited so that the flow does not exceed the assigned portion. For example, if the SSD has a processing load capacity of 1 million IOs per second ("IOPS"), and the load capacity is shared equally by 4 clients, each client is allocated 250,000 IOPS, and the flow from each client is limited to that amount. Because none of the clients can exceed their allocated share of the load capacity, none of the clients will experience reduced sustained performance caused by demands imposed on the storage device by other clients. However, this approach does not make full use of the load capacity when the flow of requests from the various clients fluctuate. In the example discussed above, a first one of the clients may need 800,000 IOPS, while the other clients require only 10,000 TOPS each. In this situation, the first client is slowed down unnecessarily, while much of the load capacity of the storage device remains unused.

In a "work sharing" arrangement, each client is permitted to send an unlimited flow of request, so long as the total flow remains below the processing load capacity of the storage device. This provides full utilization of the storage device, so that the total workload imposed by all of the clients together is performed faster than in the performance throttling approach. However, the clients which are sending requests at a low rate will experience longer latency when another client is sending requests at a high rate. Stated another way, the clients with low processing loads are treated unfairly by the storage device.

Patent US7281086B1 discloses operating the storage device to fulfil the requests at different rates so that requests having higher submission priority are fulfilled at a greater rate than requests having lower submission priorities.

### SUMMARY

One aspect of the present technology provides methods of operation which promote fairness to the clients while simultaneously allowing full utilization of the storage hardware performance. A further aspect of the present technology provides computer systems which afford similar benefits.

The invention is set out by the claims.

### BRIEF DESCRIPTION OF THE DRAWINGS

Figure 1 is a diagrammatic view of an apparatus used in one example of the present disclosure in a first operating condition.
Figure 2 is a flow chart depicting certain operations in an example of the present disclosure.
Figure 3 is a diagrammatic view of the apparatus shown in Figure 1 in a second operating condition.
Figure 4 is a diagrammatic view of apparatus according to a further example of the technology.
Figure 5 is a block diagram illustrating an example computing environment according to aspects of the disclosure.

### DETAILED DESCRIPTION

According to an example, in a computer system where multiple client computers share use of a storage device, submission priorities for input-output commands from the computers are adjusted when one or more of the client computers exceeds its quota of usage. The submission priorities for the client computers which are exceeding their quota are reduced relative to submission priorities for client computers which are not exceeding their quotas. This allows up to full usage of the processing capacity of the storage device, while minimizing effects such as unfairness and latency experienced by the other client computers.

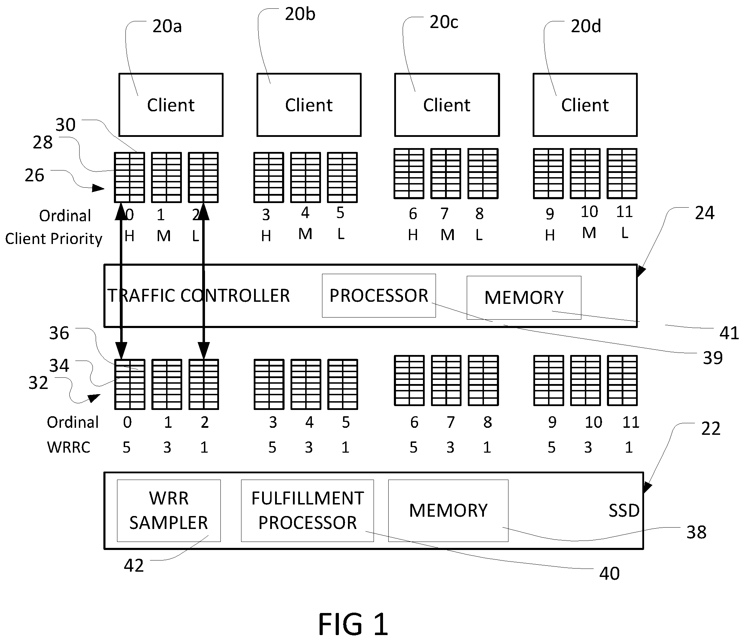

One example of the present technology is implemented in the apparatus depicted in Fig. 1. The apparatus includes four client computers 20a-20d and a solid state disk drive or "SSD" 22, and further includes a traffic controller 24. These elements are connected to one another by a network (not shown). For example, where the client computers are virtual machines operating in hosts within a data center, the network may be a local network within the data center, and the network connections may be established under control of a supervisory software program, commonly referred to as a "hypervisor". The client computers issue IO commands such as "read" or "write" commands. Because IO commands request action by the SSD, these commands are referred to herein as "requests". SSD 24 issues a completion command for each request indicating the results of the results of the request as, for example whether or not the request was performed successfully.

The network is configured so that requests from client computers 20a-20d to SSD 22 pass through the traffic controller 24 enroute to the SSD and so that completion commands from the SSD pass through the traffic controller enroute to the client computers. Each client computer sends requests and receives completion commands through a plurality of client queue pairs 26 associated with that computer and accessible to traffic controller 24. Each queue pair 26 includes a request queue 28 and a completion queue 30. In Fig. 1, the client queue pairs are designated by ordinal numbers 0-11; queue pairs numbered 0, 1 and 2 are associated with the client computer 20a; queue pairs number 3, 4 and 5 with client computer 20b and so on. Each client routes requests to the request queues in the associated queue pairs 26 according to a priority assigned by the client. For example, client 20a routes high-priority requests to the request queue 28 in pair 0; medium-priority requests to the request queue in pair 1 and low priority requests in pair 2. Each client computer receives completion commands for requests routed into a request queue of a given pair via the completion queue of the same pair. For example, client 20a will receive completion commands for high-priority requests from the completion queue of pair 0. For each client computer, these aspects of operation may be identical to operation with the computer communicating with a dedicated storage device operating according to the NVMe standard.

SSD 22 receives requests and sends completion commands via a set of storage queue pairs 32 accessible to the SSD. Each storage queue pair 32 includes a submission queue 32 which receives incoming requests and feeds them to the SSD for fulfillment, and a completion queue which receives completion commands from the SSD and directs them to the completion queues of the client queue pairs 26 via the traffic controller. The storage queue pairs 32 are designated by ordinal numbers 0-11 in Fig. 1.

SSD 22 includes a memory 38 and a fulfillment processor 40 which responds to incoming requests by performing the operations necessary to read data from or write data to the locations within memory 38 specified in the commands, generates the appropriate completion command and routes the completion command for each request to the completion queue in the same pair 32 which handled the request. For example, a completion command for a request from the submission queue in the pair 32 with ordinal number 4 will be routed to the completion queue in the same pair.

SSD 22 further includes a weighted round robin ("WRR") sampler. The WRR sampler maintains data representing a WRR coefficient associated with each submission queue, polls the submission queues in a cyclic process and submits requests taken from the various submission queues to the fulfillment processor 40. The cyclic polling process is arranged so that, during each full cycle, the number of requests taken from each submission queue corresponds to a weighted round robin coefficient ("WRRC") associated with that queue, except that empty submission queues are ignored. Stated another way, requests from submission queues having higher WRRCs are submitted to the fulfillment processor and fulfilled at a greater rate than requests from submission queues having lower WRRCs. Thus, requests from queues with higher WRRCs are processed with greater submission priority than requests from queues with lower WRRCs. In the condition shown in Fig. 1, the submission queues 34 in pairs with ordinal numbers 0, 3, 6 and 9 have WRRCs of 5 and thus have high submission priority; the submission queues in pairs with ordinal numbers 1, 4, 7 and 10 have WRRCs of 3 and thus have medium submission priority, and the submission queues in pairs with ordinal numbers 2, 5, 8 and 11 have WRRCs of 1 and low submission priority. The WRR sampler may refer to a data table showing the WRRCs explicitly. In other examples, the data table may store the data in implicit form. For example, in SSDs operating according to the NVMe standard, there are preset values for high, medium and low priority, and the sampler will apply these preset values as WRRCs to individual sampling queues depending on the characterization "high", "medium" or "low" for each sampling queue.

Traffic controller 24 includes a processor 39 and a memory 41. The memory stores software which commands the processor to perform the functions discussed below, as well as the data discussed below in connection with the processor. The traffic controller further includes components such as conventional network interfaces (not shown) which interface with the client queue pairs 28 and with the storage queue pairs 32.

The traffic controller maintains an association table which associates each client queue pair 28 with one of the clients 20a-20d and also associates each client queue pair with one of the storage queue pairs 32. In this example, each client queue pair 28 is associated with the storage queue pair having the same ordinal number, and this association is fixed during normal operation. The traffic controller routes requests and completion commands so that requests from the request queue in each client queue pair are routed to the submission queue of the associated storage queue pair, and completion commands from the completion queue in each storage pair 32 are routed to the completion queue in the associated client queue pair 28. For example, requests sent by client 20b through the request queue in the client pair 28 having ordinal number 3 are routed to the submission queue in storage pair 32 having ordinal number 3, and completion commands sent from that pair 32 are routed back to the completion queue of client pair 38 with ordinal number 3. The association between the client pairs 28 and the clients, and the association between client pairs 28 and storage pairs also establishes an association between the storage pairs and the clients. Thus, storage pairs 32 with ordinal numbers 0, 1 and 2 are associated with client 20a; those with ordinal numbers 3,4 and 5 are associated with client 20b, and so on. The traffic controller also maintains an original WRRC value and a current WRRC value for each storage pair 32. The WRRC values shown in Fig. 1 are the original values. Here again, the WRRC values may be stated as numeric values for the WRRCs or as characterizations such as "high", "medium" and "low", which will be translated by the SSD to corresponding preset values.

The traffic controller also maintains a performance table with an assigned processing load quota for each client. The processing load quota is a portion of the processing capacity of the SSD. The processing load quota is stated in terms of a value for a measure of processing load imposed on the SSD. In this example, the measure of processing load is the number of IO commands per second ("IOPS"). Thus, if the SSD has capacity to handle 1 million IOPS, and if the four clients are assigned equal quotas, each client will have a quota of 250,000 IOPS. The traffic controller also stores a value for a total processing load threshold. The total processing load threshold may be equal to the processing capacity of the SSD or, preferably, slightly less than the processing capacity, such as 90% of the processing capacity. The traffic controller also maintains a current processing load for each client which represents the actual processing load imposed by the requests sent from each computer. In this example, the traffic controller counts the number of requests sent by each client 20a-20d by counting the requests sent from the three client pairs 28 associated with that client during a counting interval and calculates the current processing load for that client 20 as, for example, by dividing the count value by the duration of the counting interval. This process is repeated continually so that the current processing load value for each client is updated after each count interval, as, for example, every 100 milliseconds. The traffic controller maintains a current total load value equal to the sum of the current processing loads for all of the clients 20a-20b. The controller updates this value when the current processing loads for the clients are updated.

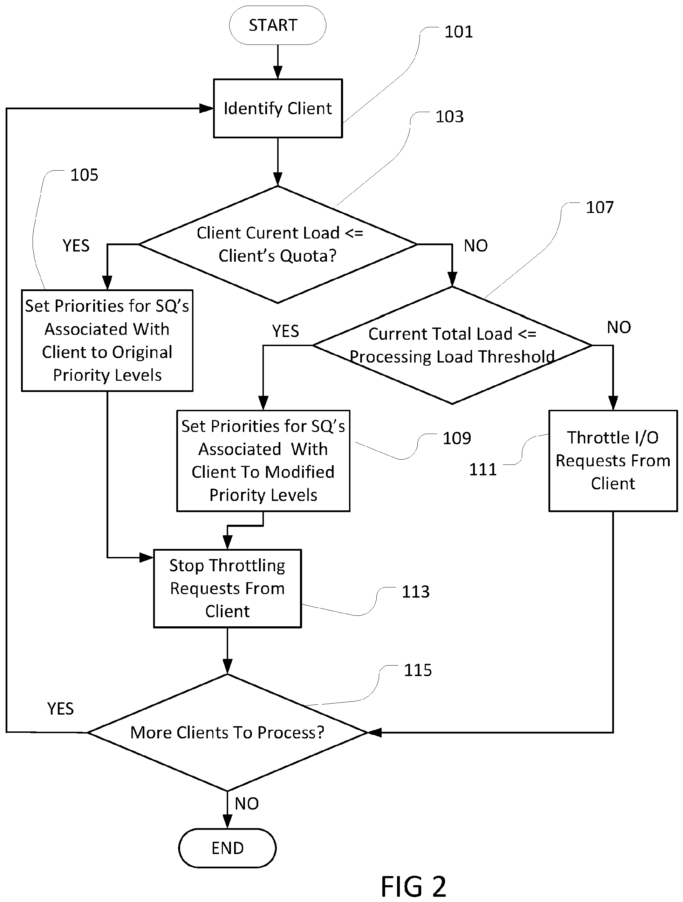

The traffic controller repeatedly executes the process shown in Figure 2. In this example, the process starts after each update of the current processing loads and current total load. In block 101, the traffic controller identifies a client. In block 103, the controller compares the current processing load for the identified client to the processing load quota for that client. While the operations of Fig. 2 are illustrated and described in a particular order, it should be understood that the order may be modified or that operations may be performed at overlapping times or simultaneously. Moreover, operations may be added or omitted.

If the current processing load for the client is less than or equal to the processing load quota for the client, the process proceeds to block 105. In block 105, the traffic controller checks the current WRRCs for the submission queues associated with the client; if they are different from the original WRRCs, the traffic controller resets the current WRRCs to the original WRRCs. When the traffic control resets WRRCs, it sends a command specifying the submission queue ordinal numbers and the new current WRRCs for those submission queues to the WRR sampler 42 to reset the WRRCs. If the current WRRCs for the submission queues associated with the client are equal to the original WRRCs, then the traffic controller takes no action in block 105.

If the current processing load for the client exceeds the processing load quota for the client at block 102, the process branches to block 107. In block 107, the traffic controller compares the current total processing load against the total processing load threshold. If the current total processing load is below the threshold, this indicates that the SSD has capacity to accommodate the excess load applied by the client above its processing load quota, and the process branches to block 109. If the current total processing load is above the total processing load threshold, this indicates that the total load is near the capacity of the SSD, and the process branches to block 111.

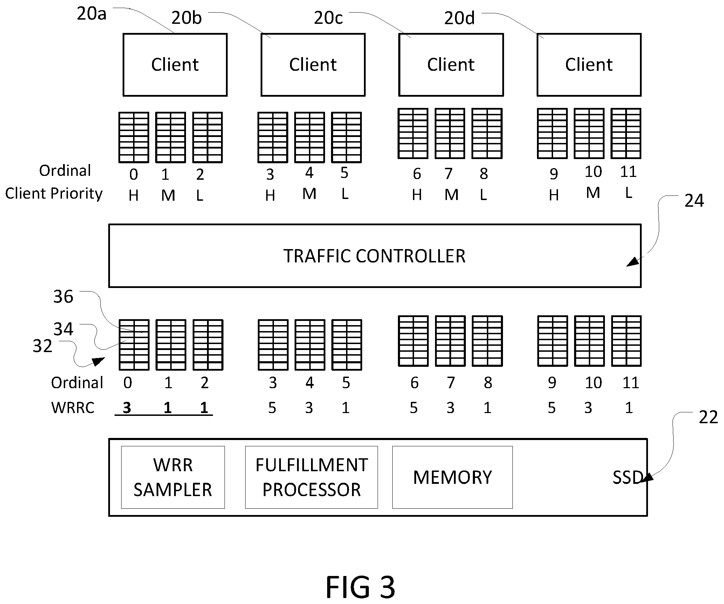

In block 109, the traffic controller checks the current WRRCs for the submission queues associated with the client; if they are the original WRRCs, the traffic controller resets the WRRCs for these submission queues to modified WRRCs such that at least some of the modified WRRCs are lower than the corresponding original WRRCs, none of the modified WRRCs are higher than the corresponding original WRRCs, and none of the modified WRRCs is zero. As shown in Figure 3, the submission queues 36 associated with client 20a have been reset to modified WRRCs 3, 1 and 1. Thus, the submission queue with ordinal number 0 has been reset from original WRRC of 5 (high priority) to modified WRRC of 3 (medium priority). The submission queue with ordinal number 1 has been reset from original WRRC of 3 (medium priority) to modified WRRC of 1 (low priority). The submission queue with ordinal number 2 has a modified WRRC of 1, equal to its original WRRC.

In block 111, the traffic controller starts a throttling process for requests coming from the client. For example, the traffic controller may reduce the rate at which it takes requests from the client request queues 28 associated with the client. In this block, the traffic controller does not change the WRRCs of the submission queues.

If the process has passed through block 105 or block 109, the process passes to block 113. In this block, the traffic controller ends throttling for requests coming from the client, if such throttling had been started earlier.

After execution of block 111 or block 115, the traffic controller determines whether there are any other clients remaining unprocessed. If so, the process returns to block 101, selects the next client and repeats. If not, the process ends. The processes may treat the clients in any order.

While all of the clients 20a-20d are sending requests at a rate below their performance load quotas, the process of Figure 2 passes through block 105 for all of the clients. The system remains in the condition shown in Figure 1. In this condition, the high priority requests from each client are set to submission queues 34 with WRRC of 5, and thus assigned high submission priority; the medium priority requests from each client are sent to submission queues 34 with WRRC of 3, and thus assigned medium submission priority, and the low priority requests from each client are sent to submission queues with WRRC of 1, and thus assigned low submission priority. This state is referred to as an "original" priority assignment scheme.

When a first set of one or more clients send requests at rate above their processing load quota, the process of Fig. 2 resets the WRRCs, and thus the submission priorities for the submission queues associated with those clients. For example, in the condition depicted in Figure 3, the first set consists of client 20a; this client is sending requests at a rate above its quota. A second set of clients, consisting of clients 20b, 20c and 20d are sending requests at rates below their quotas. The process of Fig. 2 sets the WRRCs for the submission queues 34 associated with client 20a of the first set to the modified WRRCs discussed above, but leaves the WRRCs for the other submission queues associated with clients of the second set at the original values. Thus, the high priority requests from client 20a are set to a submission queue 34 with WRRC of 3, and thus assigned medium submission priority; the medium priority requests from client 20a are sent to submission queues 34 with WRRC of 1, and thus assigned low submission priority, and the low priority requests from client 20a are sent to submission queues with WRRC of 1, and thus assigned low submission priority. The submission priorities for requests from the clients of the second set (clients 20b, 20c and 20d) remain at the same submission priorities as in the original priority scheme. Stated another way, in the modified priority scheme, the submission priorities for requests from the clients of the first set are reduced as compared to the submission priorities of the same requests under the original priority scheme. Moreover, the submission priorities for requests from the clients of the first set are reduced relative to the submission priorities for requests from clients of the second set.

As the request submission rates change, different clients are included in the first and second sets, so that different modified priority assignment schemes arise.

The reduced submission priorities for the clients of the first set mitigate the effect of the excess requests from clients of the first set on the latency encountered by requests from clients of the second set, and preserve fairness in allocating processing resources of the storage device.

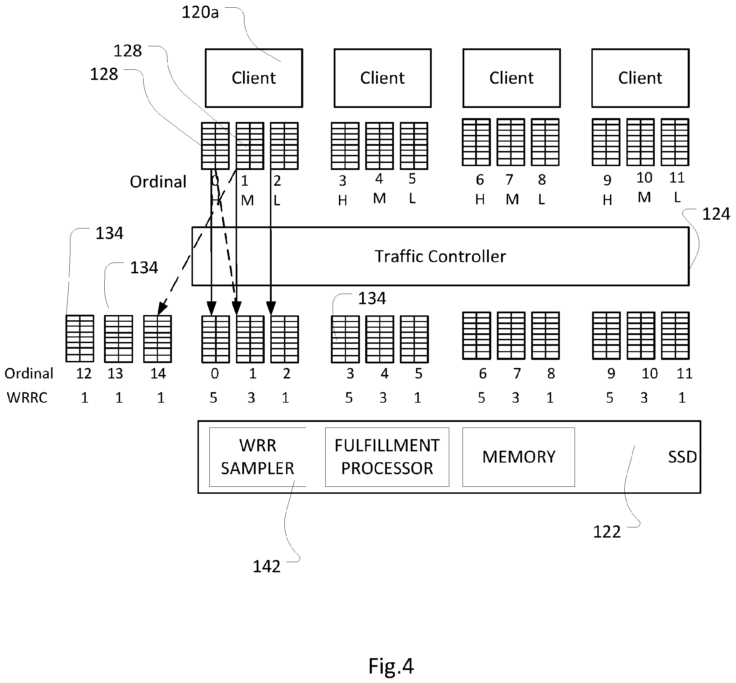

The features of the example discussed above with reference to Figures 1-3 can be varied in many ways. In one such variant, the submission priorities, such as WRRCs, for the various submission queues are fixed, but the traffic controller may change the submission priorities by directing requests from a client to a different set of submission queues. For example, the system depicted in Fig. 4 is similar to that shown in Figure 1, except that the submission queues 134 associated with the storage device 122 include three extra submission queues, with ordinal numbers 12, 13 and 14. Also, each submission queue has a fixed WRRC and hence a fixed submission priority. The submission queues with ordinal numbers 0 through 11 have fixed submission priorities constituting the original priority assignment scheme as discussed above. The extra submission queues 134 with ordinal numbers 12, 13 and 14 have fixed WRRCs of 1, and hence low submission priorities. When the original priority assignment scheme is in effect, the traffic controller 124 routes requests in the same manner as discussed above, so that requests from each client request queue 128 are directed to the submission queue 134 with the same ordinal number. This is indicated by the solid arrows in Figure 4 for the request queues associated with client 120a. In this condition, the extra request queues 134 with ordinal numbers 12, 13 and 14 remain empty. The WRR sampler 142 in the storage device 122 considers all of the submission queues 134 in the cyclic sampling process, but ignores the extra sampling queues because they are empty. When client 120a exceeds its processing load quota, the traffic controller reroutes requests from some of the client request queues 128 associated with that client as indicated by the dashed lines in Figure 4. Thus, requests from the client request queue 128 having ordinal number 0 are rerouted to the submission queue 134 having ordinal number 1. Requests from the client request queue 128 having ordinal number 1 are rerouted to one of the extra submission queues. The routing for requests from client request queue 128 with ordinal number 2 remains unchanged. The routing for requests from the other clients remains unchanged. This yields the same modified priority assignment scheme as discussed above with reference to Figure 3; here again, requests from client 120a receive submission priorities of 3, 1 and 1, for requests with high, medium and low client priority. When other clients exceed their respective processing load quotas, the requests from those clients are rerouted in similar fashion.

In the examples discussed above, the clients have equal processing load quotas and the original priority assignment scheme provides equal submission priorities to the requests from all of the clients. The quotas and original submission priorities for the clients need not be equal. The number of clients can vary. Moreover, although the example shown above includes only one storage device, the traffic controller desirably can support multiple storage devices. In this situation, different sets of submission queues are associated with different storage devices. Where the traffic controller is used in a cloud computing system, the traffic controller desirably is able to add and delete clients and storage devices as instructed by the supervisory software of the computing system.

In the examples discussed above, the measure of processing load is simply the number of IO requests per second sent by each client. Desirably, other factors such as the number of write requests, write endurance and the amount of data used in read or write requests may be used as well. These can be applied individually so that multiple measures of processing load are applied. For each measure, the traffic controller maintains a quota for each client and a total processing load threshold. For each measure, the traffic controller updates a current value representing usage by each client, as a current total for all of the clients. A process similar to the process discussed above may be implemented separately for each measure, so that modified submission priorities applied to a client are initiated when any one of the measures for that client exceeds the applicable quota. Likewise, throttling can be initiated when the current total for all of the clients exceeds the applicable total processing load. In a further variant, the multiple factors can be combined into a composite score, and this score can be used as a single measure of processing load.

In the examples discussed above, when the modified priority assignment scheme is implemented, the submission priorities for requests from clients of the first set (the clients exceeding their processing load quotas) are reduced relative to submission priorities for requests from clients of the second set by assigning submission priorities to the requests from clients of the first set which are lower than the submission priorities used for those requests in the original priority assignment scheme. In a variant, when the modified priority assignment scheme is implemented, the submission priorities for requests from clients of the second set are increased to higher than those provided in the original priority assignment scheme, while the submission priorities for requests from clients of the first set remain unchanged from those provided in the original priority assignment scheme.

In the examples discussed above, the submission priority is implemented by a weighted round robin sampler which is part of the storage device. However, the submission priorities may be implemented by a device separate from the storage device. For example, the traffic controller may incorporate a weighted round robin sampler which accepts requests from the submission queues and samples them so as to implement the submission priority assignment scheme. This sampler outputs a single stream of requests to the storage device. The traffic controller receives a single stream of completion commands from the storage device. In such an arrangement, the traffic controller desirably maintains a record of which request came from which client. The traffic controller uses this record to route the completion command corresponding to each request back to the client which sent the request.

In a further variant, the traffic controller may assign submission priorities to individual requests as the same are received from the client. The submission priority for each request will be selected according to the priority assignment scheme in effect at the time. The traffic controller then routes each request to a submission queue having a priority corresponding to the assigned priority. In this arrangement, there is no fixed association between client request queues and submission queues; all of the requests having a given submission priority may be routed to the same submission queue. These submission queues are sampled by a weighted round robin sampler in the storage device or in the traffic controller itself. Here again, the traffic controller desirably maintains records necessary to route completion commands back to the client which originated each request.

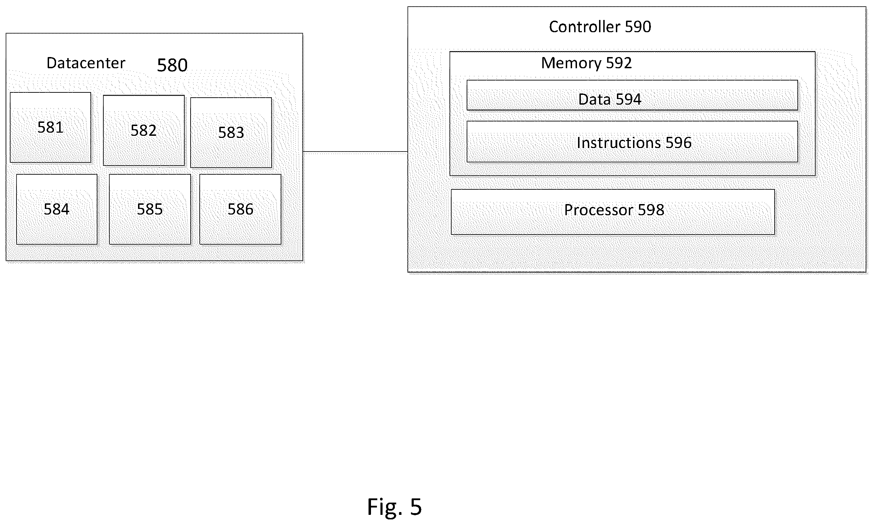

Fig. 5 is a simplified block diagram illustrating an example computing environment implementing the systems described above. Controller 590 may include hardware configured to balance throughput and fairness for devices in datacenter 580. According to one example, the controller 590 may reside within and control a particular datacenter. According to other examples, the controller 590 may be coupled to one or more datacenters 580, such as through a network, and may manage operations of multiple datacenters. In some examples, the datacenter 580 may be positioned a considerable distance from the controller 590 and/or other datacenters (not shown).

The datacenter 580 may include one or more computing and/or storage devices 581-586, such as databases, processors, servers, shards, cells, or the like. In some examples, the computing/storage devices in the datacenter may have different capacities. For example, the different computing devices may have different processing speeds, workloads, etc. While only a few of these computing/storage devices are shown, it should be understood that each datacenter 580 may include any number of computing/storage devices, and that the number of computing/storage devices in a first datacenter may differ from a number of computing/storage devices in a second datacenter. Moreover, it should be understood that the number of computing devices in each datacenter 580 may vary over time, for example, as hardware is removed, replaced, upgraded, or expanded.

In some examples, the controller 590 may communicate with the computing/storage devices in the datacenter 580, and may facilitate the execution of programs. For example, the controller 590 may track the capacity, status, workload, or other information of each computing device, and use such information to assign tasks. The controller 590 may include a processor 598 and memory 592, including data 594 and instructions 596. In other examples, such operations may be performed by one or more of the computing devices in the datacenter 580, and an independent controller may be omitted from the system.

The controller 590 may contain a processor 598, memory 592, and other components typically present in server computing devices. The memory 592 can store information accessible by the processor 598, including instructions 596 that can be executed by the processor 598. Memory can also include data 594 that can be retrieved, manipulated or stored by the processor 598. The memory 592 may be a type of non-transitory computer readable medium capable of storing information accessible by the processor 598, such as a hard-drive, solid state drive, tape drive, optical storage, memory card, ROM, RAM, DVD, CD-ROM, write-capable, and read-only memories. The processor 598 can be a well-known processor or other lesser-known types of processors. Alternatively, the processor 598 can be a dedicated controller such as an ASIC.

The instructions 596 can be a set of instructions executed directly, such as machine code, or indirectly, such as scripts, by the processor 598. In this regard, the terms "instructions," "steps" and "programs" can be used interchangeably herein. The instructions 596 can be stored in object code format for direct processing by the processor 598, or other types of computer language including scripts or collections of independent source code modules that are interpreted on demand or compiled in advance.

The data 594 can be retrieved, stored or modified by the processor 598 in accordance with the instructions 596. For instance, although the system and method is not limited by a particular data structure, the data 594 can be stored in computer registers, in a relational database as a table having a plurality of different fields and records, or XML documents. The data 594 can also be formatted in a computer-readable format such as, but not limited to, binary values, ASCII or Unicode. Moreover, the data 594 can include information sufficient to identify relevant information, such as numbers, descriptive text, proprietary codes, pointers, references to data stored in other memories, including other network locations, or information that is used by a function to calculate relevant data.

Although Fig. 5 functionally illustrates the processor 598 and memory 592 as being within the same block, the processor 598 and memory 592 may actually include multiple processors and memories that may or may not be stored within the same physical housing. For example, some of the instructions 596 and data 594 can be stored on a removable CD-ROM and others within a read-only computer chip. Some or all of the instructions and data can be stored in a location physically remote from, yet still accessible by, the processor 598. Similarly, the processor 598 can actually include a collection of processors, which may or may not operate in parallel.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of the example implementations should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible examples. Further, the same reference numbers in different drawings can identify the same or similar elements.

## Claims

1. A method of processing requests sent by a plurality of client computers, to a shared storage device having a processing load capacity, the method comprising:
operating the storage device to fulfill the requests at different rates so that requests having higher submission priority are fulfilled at a greater rate than requests having lower submission priorities;
monitoring a measure of processing load represented by the requests sent by each client computer;
identifying (101) a client of the plurality of client computers;
comparing (103) a current processing load for the identified client to a processing load quota for that client;
if the current processing load for the client is less than or equal to the processing load quota for the client:
assigning (105) submission priorities to the requests according to an original priority assignment scheme;
if the current processing load for the client exceeds the processing load quota for the client; and
if a current total processing load is below a total processing load threshold:
assigning (109) submission priorities to the requests according to a modified priority assignment scheme.

2. The method of claim 1, comprising, when the sum of the measures of loads for all of the client computers exceeds a total load threshold, throttling (111) requests from the client computer.

3. The method of claim 1 to 2, wherein operating the storage device to fulfill the requests at different rates comprises maintaining a plurality of submission queues, each submission queue having a submission priority, and wherein assigning submission priorities to requests includes directing requests to the submission queues.

4. The method of claim 3, wherein each submission queue has a weighted round robin coefficient, the method including taking requests from the submission queues for fulfillment using a cyclic weighted round robin process, such that a number of submission requests taken form fulfillment during each cycle of the process is directly related to the weighted round robin coefficient of that submission queue; and/or
wherein the same set of submission queues is used in the original priority assignment scheme and in the modified priority assignment scheme, the method including changing the submission priority for at least one of the submission queues to change from the original assignment scheme to a modified assignment scheme.

5. The method of claim 3 or 4, wherein each client computer sends requests to one or more client queues associated with that client computer, and directing requests to the submission queues includes directing requests from each client queue to a corresponding one of the submission queues.

6. The method of claim 5, wherein the fulfilling comprises directing completion commands from the storage device into a set of completion queues so that a completion command generated upon fulfillment of a request taken from a given submission queue is directed into a completion queue corresponding to that submission queue, whereby the completion command for a request from a given input queue will be directed into a completion queue corresponding to that input queue.

7. The method of one of claims 1 to 6, wherein the requests are input/output (IO) requests.

8. A computer system, comprising:
a storage device; and
a traffic controller arranged to:
monitor a measure of processing load represented by requests sent by each of a plurality of client computers;
the traffic controller is operative to identify a client of the plurality of client computers;
the traffic controller is operative to compare a current processing load for the identified client to a processing load quota for that client;
if the current processing load for the client is less than or equal to the processing load quota for the client:
the traffic controller is operative to assign submission priorities to the requests according to an original priority assignment scheme;
if the current processing load for the client exceeds the processing load quota for the client; and
if a current total processing load is below a total processing load threshold:
the traffic controller is operative to assign submission priorities to the requests according to a modified priority assignment scheme; and
direct the requests to the storage device so that requests having higher submission priority are fulfilled at a greater rate than requests having lower submission priorities.

9. The computer system of claim 8, further comprising a set of submission queues, each said submission queue having an associated submission priority, and a sampler arranged to take requests for fulfillment by the storage device from each queue at a rate directly related to the submission priority associated with that queue, the traffic controller being operative to assign submission priorities to the requests by directing the requests to the submission queue.

10. The computer system of claim 9, wherein the sampler is a weighted round robin sampler and the submission priority associated with each queue is a weighted round robin coefficient for that queue; and/or
wherein the traffic controller is operative to change the submission priority associated with at least one of the submission queues to change from an original assignment scheme to the modified assignment scheme.

11. The computer system of claim 8 to 10, wherein when the sum of the measures of loads for all of the client computers exceeds a total load threshold, the traffic controller is operative to throttle requests from the client.

12. A non-transitory computer-readable medium storing instructions executable by one or more processors for performing the method of one of claims 1 to 7.

## Patentansprüche

1. Verfahren zur Verarbeitung von Anfragen, die von einer Vielzahl von Client-Computern an eine gemeinsam genutzte Speichervorrichtung mit einer Verarbeitungslastkapazität gesendet werden, wobei das Verfahren Folgendes umfasst:
Betreiben der Speichervorrichtung, um die Anfragen mit unterschiedlichen Raten zu erfüllen, sodass Anfragen mit höherer Übermittlungspriorität mit einer höheren Rate erfüllt werden als Anfragen mit niedrigeren Übermittlungsprioritäten;
Überwachen eines Maßes für die Verarbeitungslast, das durch die von jedem Client-Computer gesendeten Anfragen dargestellt wird; Identifizieren (101) eines Clients der Vielzahl von Client-Computern;
Vergleichen (103) einer aktuellen Verarbeitungslast für den identifizierten Client mit einem Verarbeitungslastkontingent für diesen Client;
wenn die aktuelle Verarbeitungslast des Clients kleiner oder gleich dem Verarbeitungslastkontingent des Clients ist:
Zuweisen (105) von Übermittlungsprioritäten zu den Anfragen gemäß einem ursprünglichen Prioritätszuweisungsschema;
wenn die aktuelle Verarbeitungslast für den Client das Verarbeitungslastkontingent für den Client überschreitet; und
wenn eine aktuelle Gesamtverarbeitungslast unter einem Schwellenwert für die Gesamtverarbeitungslast liegt:
Zuweisen (109) von Übermittlungsprioritäten zu den Anfragen gemäß einem modifizierten Prioritätszuweisungsschema.

2. Verfahren nach Anspruch 1, umfassend das Drosseln (111) von Anfragen des Client-Computers, wenn die Summe der Lastmesswerte aller Client-Computer einen Gesamtlastschwellenwert überschreitet.

3. Verfahren nach Anspruch 1 bis 2, wobei das Betreiben der Speichervorrichtung zum Erfüllen der Anfragen mit unterschiedlichen Raten das Aufrechterhalten einer Vielzahl von Übermittlungswarteschlangen umfasst, wobei jede Übermittlungswarteschlange eine Übermittlungspriorität aufweist, und wobei das Zuweisen von Übermittlungsprioritäten zu Anfragen das Weiterleiten von Anfragen an die Übermittlungswarteschlangen beinhaltet.

4. Verfahren nach Anspruch 3, wobei jede Übermittlungswarteschlange einen gewichteten Round-Robin-Koeffizienten aufweist, wobei das Verfahren das Entnehmen von Anfragen aus den Übermittlungswarteschlangen zur Erfüllung unter Verwendung eines zyklischen gewichteten Round-Robin-Prozesses beinhaltet, sodass eine Anzahl von Übermittlungsanfragen, die während jedes Zyklus des Prozesses zur Erfüllung entnommen werden, in direktem Zusammenhang mit dem gewichteten Round-Robin-Koeffizienten dieser Übermittlungswarteschlange steht; und/oder
wobei derselbe Satz von Übermittlungswarteschlangen im ursprünglichen Prioritätszuweisungsschema und im modifizierten Prioritätszuweisungsschema verwendet wird, wobei das Verfahren das Ändern der Übermittlungspriorität für mindestens eine der Übermittlungswarteschlangen beinhaltet, um von dem ursprünglichen Zuweisungsschema zu einem modifizierten Zuweisungsschema zu wechseln.

5. Verfahren nach Anspruch 3 oder 4, wobei jeder Client-Computer Anfragen an eine oder mehrere Client-Warteschlangen sendet, die diesem Client-Computer zugeordnet sind, und wobei das Weiterleiten von Anfragen an die Übermittlungswarteschlangen das Weiterleiten von Anfragen aus jeder Client-Warteschlange an eine entsprechende der Übermittlungswarteschlangen beinhaltet.

6. Verfahren nach Anspruch 5, wobei das Erfüllen das Weiterleiten von Abschlussbefehlen von der Speichervorrichtung in einen Satz von Abschlusswarteschlangen umfasst, sodass ein Abschlussbefehl, der bei Erfüllung einer aus einer gegebenen Übermittlungswarteschlange entnommenen Anfrage erzeugt wird, in eine Abschlusswarteschlange weitergeleitet wird, die dieser Übermittlungswarteschlange entspricht, wodurch der Abschlussbefehl für eine Anfrage aus einer gegebenen Eingabewarteschlange in eine Abschlusswarteschlange weitergeleitet wird, die dieser Eingabewarteschlange entspricht.

7. Verfahren nach einem der Ansprüche 1 bis 6, wobei es sich bei den Anfragen um Eingabe-/Ausgabe-Anfragen (E/A-Anfragen) handelt.

8. Computersystem, umfassend:
eine Speichervorrichtung; und
eine Verkehrssteuerung, die eingerichtet ist zum:
Überwachen eines Maßes für die Verarbeitungslast, das durch Anfragen dargestellt wird, die von jedem einer Vielzahl von Client-Computern gesendet werden;
wobei die Verkehrssteuerung dazu dient, einen Client der Vielzahl von Client-Computern zu identifizieren;
wobei die Verkehrssteuerung dazu dient, eine aktuelle Verarbeitungslast für den identifizierten Client mit einem Verarbeitungslastkontingent für diesen Client zu vergleichen;
wenn die aktuelle Verarbeitungslast des Clients kleiner oder gleich dem Verarbeitungslastkontingent des Clients ist:
die Verkehrssteuerung dazu dient, den Anfragen Übermittlungsprioritäten gemäß einem ursprünglichen Prioritätszuweisungsschema zuzuweisen;
wenn die aktuelle Verarbeitungslast für den Client das Verarbeitungslastkontingent für den Client überschreitet; und
wenn eine aktuelle Gesamtverarbeitungslast unter einem Schwellenwert für die Gesamtverarbeitungslast liegt:
die Verkehrssteuerung dazu dient, den Anfragen Übermittlungsprioritäten gemäß einem modifizierten Prioritätszuweisungsschema zuzuweisen; und
Weiterleiten der Anfragen an die Speichervorrichtung, sodass Anfragen mit höherer Übermittlungspriorität mit einer höheren Rate erfüllt werden als Anfragen mit niedrigeren Übermittlungsprioritäten.

9. Computersystem nach Anspruch 8, ferner umfassend einen Satz von Übermittlungswarteschlangen, wobei jede der Übermittlungswarteschlangen eine zugeordnete Übermittlungspriorität aufweist, und eine Abtasteinrichtung, die angeordnet ist, um Anfragen zur Erfüllung durch die Speichervorrichtung aus jeder Warteschlange mit einer Rate zu entnehmen, die in direktem Zusammenhang mit der dieser Warteschlange zugeordneten Übermittlungspriorität steht, wobei die Verkehrssteuerung dazu dient, den Anfragen Übermittlungsprioritäten zuzuweisen, indem sie die Anfragen an die Übermittlungswarteschlange weiterleitet.

10. Computersystem nach Anspruch 9, wobei die Abtasteinrichtung eine gewichtete Round-Robin-Abtasteinrichtung ist und die jeder Warteschlange zugeordnete Übermittlungspriorität ein gewichteter Round-Robin-Koeffizient für diese Warteschlange ist; und/oder
wobei die Verkehrssteuerung dazu dient, die mindestens einer der Übermittlungswarteschlangen zugeordnete Übermittlungspriorität zu ändern, um von einem ursprünglichen Zuweisungsschema zu dem modifizierten Zuweisungsschema zu wechseln.

11. Computersystem nach Anspruch 8 bis 10, wobei, wenn die Summe der Lastmesswerte für alle Client-Computer einen Gesamtlastschwellenwert überschreitet, die Verkehrssteuerung dazu dient, Anfragen von dem Client zu drosseln.

12. Nichttransitorisches computerlesbares Medium, das von einem oder mehreren Prozessoren ausführbare Anweisungen speichert, um das Verfahren nach einem der Ansprüche 1 bis 7 durchzuführen.

## Revendications

1. Procédé de traitement de demandes envoyées par une pluralité d'ordinateurs clients à un dispositif de stockage partagé ayant une capacité de charge de traitement, le procédé comprenant :
le fait de faire fonctionner le dispositif de stockage pour satisfaire les demandes à des débits différents, de sorte que les demandes ayant une priorité de soumission plus élevée soient satisfaites à un débit supérieur à celui des demandes ayant des priorités de soumission plus basses ;
la surveillance d'une mesure de charge de traitement représentée par les demandes envoyées par chaque ordinateur client ;
l'identification (101) d'un client de la pluralité d'ordinateurs clients ;
la comparaison (103) d'une charge de traitement actuelle pour le client identifié à un quota de charge de traitement pour ce client ;
si la charge de traitement actuelle pour le client est inférieure ou égale au quota de charge de traitement pour le client :
l'attribution (105) de priorités de soumission aux demandes selon un schéma d'attribution de priorité d'origine ;
si la charge de traitement actuelle pour le client dépasse le quota de charge de traitement pour le client ; et
si une charge de traitement totale actuelle est inférieure à un seuil de charge de traitement total :
l'attribution (109) de priorités de soumission aux demandes selon un schéma d'attribution de priorité modifié.

2. Procédé selon la revendication 1, comprenant, lorsque la somme des mesures de charges pour tous les ordinateurs clients dépasse un seuil de charge total, la limitation (111) des demandes provenant de l'ordinateur client.

3. Procédé selon la revendication 1 et 2, dans lequel le fait de faire fonctionner le dispositif de stockage pour satisfaire les demandes à des débits différents comprend le maintien d'une pluralité de files d'attente de soumission, chaque file d'attente de soumission ayant une priorité de soumission, et dans lequel l'attribution de priorités de soumission aux demandes comporte le fait de diriger des demandes vers les files d'attente de soumission.

4. Procédé selon la revendication 3, dans lequel chaque file d'attente de soumission a un coefficient de répartition en tourniquet pondérée, le procédé comportant le prélèvement de demandes, à partir des files d'attente de soumission, pour satisfaction à l'aide d'un processus de répartition en tourniquet pondérée cyclique, de sorte qu'un nombre de demandes de soumission prélevées pour être satisfaites au cours de chaque cycle du processus soit directement lié au coefficient de répartition en tourniquet pondérée de cette file d'attente de soumission ; et/ou
dans lequel le même ensemble de files d'attente de soumission est utilisé dans le schéma d'attribution de priorité d'origine et dans le schéma d'attribution de priorité modifié, le procédé comportant le changement de la priorité de soumission pour au moins l'une des files d'attente de soumission pour passer du schéma d'attribution d'origine à un schéma d'attribution modifié.

5. Procédé selon la revendication 3 ou 4, dans lequel chaque ordinateur client envoie des demandes à une ou à plusieurs files d'attente client associées à cet ordinateur client, et le fait de diriger des demandes vers les files d'attente de soumission comporte le fait de diriger des demandes de chaque file d'attente client vers une file d'attente de soumission correspondante des files d'attente de soumission.

6. Procédé selon la revendication 5, dans lequel la satisfaction comprend le fait de diriger des commandes d'achèvement du dispositif de stockage vers un ensemble de files d'attente d'achèvement, de sorte qu'une commande d'achèvement générée lors de la satisfaction d'une demande prélevée d'une file d'attente de soumission donnée soit dirigée vers une file d'attente d'achèvement correspondant à cette file d'attente de soumission, moyennant quoi la commande d'achèvement pour une demande provenant d'une file d'attente d'entrée donnée sera dirigée vers une file d'attente d'achèvement correspondant à cette file d'attente d'entrée.

7. Procédé selon l'une des revendications 1 à 6, dans lequel les demandes sont des demandes d'entrée/sortie (E/S).

8. Système informatique, comprenant :
un dispositif de stockage ; et
un dispositif de commande de trafic agencé pour :
surveiller une mesure de charge de traitement représentée par les demandes envoyées par chacun d'une pluralité d'ordinateurs client ;
le dispositif de commande de trafic est opérationnel pour identifier un client de la pluralité d'ordinateurs clients ;
le dispositif de commande de trafic est opérationnel pour comparer une charge de traitement actuelle pour le client identifié à un quota de charge de traitement pour ce client ;
si la charge de traitement actuelle pour le client est inférieure ou égale au quota de charge de traitement pour le client :
le dispositif de commande de trafic est opérationnel pour attribuer des priorités de soumission aux demandes selon un schéma d'attribution de priorité d'origine ;
si la charge de traitement actuelle pour le client dépasse le quota de charge de traitement pour le client ; et
si une charge de traitement totale actuelle est inférieure à un seuil de charge de traitement total :
le dispositif de commande de trafic est opérationnel pour attribuer des priorités de soumission aux demandes selon un schéma d'attribution de priorité modifié ; et
diriger les demandes vers le dispositif de stockage de sorte que les demandes ayant une priorité de soumission plus élevée soient satisfaites à un débit supérieur à celui des demandes ayant des priorités de soumission plus basses.

9. Système informatique selon la revendication 8, comprenant également un ensemble de files d'attente de soumission, chaque dite file d'attente de soumission ayant une priorité de soumission associée, et un échantillonneur agencé pour prélever, à partir de chaque file d'attente, des demandes pour satisfaction par le dispositif de stockage à un débit directement lié à la priorité de soumission associée à cette file d'attente, le dispositif de commande de trafic étant opérationnel pour attribuer des priorités de soumission aux demandes en dirigeant les demandes vers la file d'attente de soumission.

10. Système informatique selon la revendication 9, dans lequel l'échantillonneur est un échantillonneur à répartition en tourniquet pondérée et la priorité de soumission associée à chaque file d'attente est un coefficient de répartition en tourniquet pondérée pour cette file d'attente ; et/ou dans lequel le dispositif de commande de trafic est opérationnel pour changer la priorité de soumission associée à au moins l'une des files d'attente de soumission pour passer d'un schéma d'attribution d'origine au schéma d'attribution modifié.

11. Système informatique selon la revendication 8 à 10, dans lequel, lorsque la somme des mesures de charges pour tous les ordinateurs clients dépasse un seuil de charge total, le dispositif de commande de trafic est opérationnel pour limiter les demandes provenant du client.

12. Support non transitoire lisible par ordinateur stockant des instructions exécutables par un ou plusieurs processeurs pour réaliser le procédé selon l'une quelconque des revendications 1 à 7.
